# EUROPÄISCHE PATENTSCHRIFT

(11) **EP 3 254 767 B1**
(45) Veröffentlichungstag und Bekanntmachung des Hinweises auf die Patenterteilung: **11.03.2020**
(21) Anmeldenummer: 17178702.1
(22) Anmeldetag: 26.11.2008
(51) Int. Cl.: B05C 13/02, B31B 70/62, B31B 70/04, B31B 150/00, B31B 160/20, B05C 5/02

(54) **BODENLEGEVORRICHTUNG ZUR HERSTELLUNG VON SÄCKEN**
BOTTOMER FOR MANUFACTURING SACKS
DISPOSITIF DE POSE DE FOND DE SAC POUR LA FABRICATION DE SACS

(30) Priorität: 30.11.2007 DE 102007057820
(43) Veröffentlichungstag der Anmeldung: 13.12.2017
(62) Teilanmeldung aus: 08853547.1
(73) Patentinhaber: Windmöller & Hölscher KG, 49525 Lengerich (DE)
(72) Erfinder: DUWENDAG, Rüdiger, 49525 Lengerich (DE); DAHER, Marco, 49525 Lengerich (DE); KNOKE, Thomas, 49525 Lengerich (DE); LAMKEMEYER, Andreas, 49525 Lengerich (DE)

(56) Entgegenhaltungen:
- EP-A- 1 539 374
- DE-A1- 10 261 256
- DE-A1- 10 303 285
- DE-A1- 19 535 649
- DE-A1- 19 639 260
- DE-C1- 10 208 790
- DE-U1- 8 611 886
- US-A- 3 448 666

## Beschreibung

Die Erfindung betrifft eine Bodenlegevorrichtung zur Herstellung von Säcken, ein Leimwerk zur Beleimung flacher Gegenstände sowie ein Sackherstellungsverfahren.

Bodenlegevorrichtungen sind bekannt. Insbesondere die Herstellung von Kreuzbodenventilsäcken ist seit langem bekannt, ist Gegenstand zahlreicher Druckschriften (z. B. DE 710 264 oder DE 746 334) und wird mit so genannten Bodenlegern oder Bodenlegevorrichtungen durchgeführt.
Auch die Beleimung von Bestandteilen der Säcke während der Produktion ist seit langem druckschriftlich bekannt (z. B. DE 090 145 48 U1 und DE 30 200 43 A1).
Traditionelle Beleimungsstationen verwenden Walzen, die in der Regel ein Klischee tragen, um die Sackbestandteile zu beleimen. Bei Kreuzbodenlegern werden oft die gefalteten Böden der Säcke, den Böden zugeordnete Deckblätter und Ventilzettel beleimt.
In jüngerer Zeit sind Vorrichtungen bekannt geworden, die Sackbestandteile mit Düsen beleimen. Diese Düsen sind an einem Düsenkopf oder einer Düsenleiste angebracht beziehungsweise in Form von Bohrungen in diese Körper eingebracht. Die DE 103 09 893 A1 zeigt eine solche Vorrichtung. Auch die US 3 448 666 beschäftigt sich mit dem Leimauftrag durch Düsenbeleimung.

Vorrichtungen der genannten Art bieten eine Reihe von Vorteilen. So wird die Vielzahl unterschiedlicher Klischees, die zur Produktion unterschiedlicher Sackformate bereitgehalten werden muss, überflüssig gemacht.

Die DE 86 11 886 U1 zeigt eine Vorrichtung zum gleichmäßigen Auftragen einer fließfähigen Substanz auf eine Warenbahn, wobei die Warenbahn oberhalb eines Transportbandes und unterhalb einer Düsenleiste geführt wird. Durch das Transportband kann die Warenbahn nicht zurückweichen, so dass ein gleichmäßiger Flächendruck entsteht.

Allerdings besteht bei der Gewährleistung eines gleichmäßigen und kontinuierlichen Leimauftrages auf die Sackbestandteile weiterhin Verbesserungsbedarf.

Daher besteht die Aufgabe der vorliegenden Erfindung darin, Vorrichtungen und ein Verfahren vorzuschlagen, bei denen der Leimauftrag gleichmäßiger und kontinuierlicher ist.

Deshalb geht die vorliegende Erfindung von der Lehre der DE 103 09 893 A1 bzw., betreffend der Leimwerk, dem DE 86 11 886 U1 aus und löst die Aufgabe durch die Beifügung der kennzeichnenden Merkmale der Ansprüche 1, 14 und 15.

Es hat sich gezeigt, dass eine Gegenlage, welche die Sackbestandteile mit einer Kraft an die Düsenleiste anstellt, dazu führt, dass die bei der Sackproduktion üblichen Stärkeleime in gleichmäßiger Form von den Sackbestandteilen mitgenommen oder abgezogen werden, wenn das betreffende Sackbestandteil sich mit einer Relativgeschwindigkeit an der Düsenleiste vorbeibewegt. Dies gilt insbesondere beim Auftragen von Kaltleim.

Diese Bewegung (mit der oben genannten Relativgeschwindigkeit) wird in der Regel eine Bewegung der Sackbestandteile an einer ortsfesten Düsenleiste vorbei sein, wie auch in der vorgenannten DE 103 09 893 A1 angedeutet ist. Die betreffende Düsenleiste kann eine beliebige Anzahl von Düsen aufweisen oder diese tragen. Interessant sind hier insbesondere mehr als zwei Düsen. Vorteilhaft sind jedoch auch Ausführungsformen mit mehr als fünf Düsen. Im Zusammenhang mit der Beleimung von Kreuzböden werden vorteilhafterweise mehr als zehn Düsen zum Einsatz kommen. In Bodenlegevorrichtungen können mit solchen Leimwerken neuer Bauart gefaltete Böden von Säcken und/oder Bodendeckblättern und/oder Ventilzettel beleimt werden.
Zu erwähnen bleibt noch, dass der Fachmann in der Regel zwischen Beuteln und Säcken unterschiedet. In der vorliegenden Anspruchsfassung soll der Begriff Säcke jedoch Beutel und/oder Säcke bedeuten.

Wie bereits oben erwähnt, werden die Sackbestandteile durch eine Gegenlage mit einer Kraft an die Düsen angestellt. Dabei ist es vorgesehen, dass die Gegenlage zumindest teilweise aus flexiblem Material besteht. Die Flexibilität des Gegenlagenmaterials gewährleistet, dass die zu beleimende Oberfläche der Sackbestandteile, welche aus mehreren Materiallagen unterschiedlicher Größe und Überlappung bestehen, an die Düsenleiste angedrückt wird. Zusätzlich zu oder anstatt der Flexibilität, die zumindest gewährleistet, dass die Sackbestandteile nicht durch eine zu starre Gegenlage zerdrückt werden, können auch federnde Elemente in die Gegenlage eingebracht werden. Die federnden Elemente bringen zusätzlich zu der Weichheit der flexiblen Teile ein Mehr an Rückstellkraft auf. Elastische Materialien können Elastomere sein. Als Beispiel für federnde Materialien werden Federbleche genannt.

Die US 3 448 666 offenbart,
**dass** die Gegenlage eine Wirkfläche aufweist, und
**dass** mit dieser Wirkfläche zumindest ein Teil der Rückseite der zu beleimenden Fläche eines Sackbestandteiles mit Kraft beaufschlagbar ist, während das Sackbestandteil die Beleimungsstation durchläuft.

Mit einer solchen Wirkfläche kann die zur Anstellung der Sackbestandteile notwendige Kraft gleichmäßig und gegebenenfalls großflächig an die Sackbestandteile weitergegeben werden. Die Übertragung auf die Rückseite der zu beleimenden Fläche hat weitere Vorteile.

Es ist erfindungsgemäß vorgesehen, die Wirkfläche segmentiert auszugestalten. Besonders vorteilhaft ist dies, wenn die zu beleimenden Flächen unterschiedliche Dicken haben. Dies kann sich durch unterschiedliche Anzahlen von Papier- oder Folienlagen ergeben. Segmentiert heißt in diesem Zusammenhang, dass die Wirkfläche in Teilflächen zerlegt ist. Die Teilflächen übertragen unabhängig voneinander Kraft auf die Rückseite der Sackbestandteile. Diese Teilflächen können daher auch unabhängig voneinander beweglich sein.

Diese Teilflächen können rechteckig oder oval sein und quasi als Stempel gegen die Rückseite der Sackbestandteile arbeiten. Die Länge der Teilflächen (Ausdehnung in Richtung der Relativbewegung der Sackbestandteile zur Düsenleiste) kann hierbei in einem Verhältnis zur Breite (Ausdehnung quer zur Bewegungsrichtung) stehen. Vorteilhaft sind Verhältnisse größer 1:4 zwischen Breite und Länge.
Die Verwendung von Bändern, deren den Sackbestandteilen zugewandten Oberflächenbestandteile die Wirkfläche bilden, ist vorgesehen. Die Bänder weisen dabei eine Elastizität auf. Dass die sich aus mehreren aufgespannten Bändern zusammengesetzte Wirkfläche segmentiert ist, ergibt sich bei der Verwendung mehrerer Bänder von selbst. Die Bänder werden in der Regel parallel zueinander aufgespannt werden. Als vorteilhaft hat es sich erwiesen, wenn die Bänder entlang der Richtung der Relativbewegung der Sackbestandteile in der Beleimungsstation ausgerichtet sind. Zumeist verläuft die Düsenleiste quer zu der Bewegungsrichtung der Sackbestandteile. In diesem Fall ergeben sich annähernd punktuelle Bereiche, in denen erfindungsgemäß das durch die Kraftwirkung der Düsenleiste in Richtung auf die Wirkfläche ausgelenkte Band mit einer Kraft auf die Rückseite der Sackbestandteile drückt.
Vorteilhaft ist auch, wenn die Bänder in diesem unmittelbaren Einwirkungsbereich der Düsenleiste nicht von einer Walze unterstützt werden. Es kommt die Verwendung verschiedener elastischer Bänder an dieser Stelle in Frage. Die Bänder können auch beweglich an der Gegenlagevorrichtung angelenkt sein. Von Vorteil ist auch hier eine Beweglichkeit mit derselben Ausrichtung und gegebenenfalls demselben Vorzeichen wie die Relativbewegung zwischen Sackbestandteilen und Düsenleiste. Beweglichkeit in dem vorgenannten Sinne heißt, dass die Bänder und die von ihnen definierte Wirkfläche relativ zum Maschinengestell beweglich sind. In der Regel wird man eine solche Beweglichkeit durch das Führen solcher Bänder über Leitwalzen herbeiführen. Endlose Bänder sind hierbei vorteilhaft. Es ist möglich, die beweglichen Bänder durch die Relativbewegung der Sackbestandteile relativ zur Beleimungsstation in Bewegung zu versetzen. Die Sackbestandteile werden in der Regel durch andere Transportmittel wie Transportriemen (könnten auch Greifer oder Ähnliches sein) durch die Maschine geführt und könnten so Antriebskräfte auf die in Rede stehenden Bänder der Gegenlage übertragen.
In diesem Falle wären die betreffenden Sackbestandteile jedoch gewissen Übertragungskräften (besonders nachteilig Scherkräfte) ausgesetzt.
Daher ist es vorteilhaft, die Bänder anzutreiben, wobei die Antriebsrichtung bevorzugt in Richtung und/oder Geschwindigkeit der Transportbewegung der Säcke in der Beleimungsstation anzugleichen ist.

Es ist vorteilhaft, die Gegenlagevorrichtung und/oder die Düsenleiste so am Maschinengestell anzulenken, dass sich der Einlaufwinkel der Sackbestandteile zur Düsenleiste ändern lässt. In der Regel wird man hierzu die Wirkfläche relativ zum Maschinengestell verschwenken, das heißt, diejenigen Bauteile, die die Wirkfläche tragen oder definieren, werden schwenkbar am Maschinengestell angelenkt. Zusammenfassend ist also zu sagen, dass unter Schwenkbarkeit eine Beweglichkeit der Gegenlage zu verstehen ist, die den Einlaufwinkel der Sackbestandteile in den Spalt zwischen Gegenlage und Düsenlage ändert. In jedem Fall ist das Vorsehen einer solchen Schwenkbarkeit der Relativposition der Gegenlage zur Düsenleiste von Vorteil. Alternativ und ergänzend ist eine lineare relative Beweglichkeit von Gegenlage zu Düsenkopf von Vorteil. Dies kann durch eine Beweglichkeit des Düsenkopfes relativ zum Maschinengestell geschehen. Allerdings ist auch hier sowohl alternativ als auch ergänzend eine zusätzliche lineare Beweglichkeit der Gegenlage zur Düsenleiste von Vorteil.

So kann der Anpressdruck der Sackbestandteile durch diese Beweglichkeit eingestellt werden, und es ist möglich, unter anderem auf unterschiedliche Dicken der Sackbestandteile einzugehen.

Eine weitere vorteilhafte Ausführungsform der Erfindung hat Haltemittel, die den Sackbestandteilen eine Haltekraft vermitteln. Diese Haltekraft wird vorteilhafterweise auf die Seite der Sackbestandteile übertragen, auf die der Leim in der entsprechenden Beleimungsstation aufgetragen wird. So kann eine Klemmung herbeigeführt werden, wenn die Kraft der Gegenlage, die in Richtung der Düsenleiste wirkt und die Kraft der Haltemittel einander entgegenwirken. Es ist vorteilhaft, wenn die Haltekraft auf diskrete abgeschlossene Flächenbereiche der Sackbestandteile wirkt. Diese können in der Raumrichtung (x) quer zur Relativbewegung der Sackbestandteile voneinander beabstandet sein. In letzterem Fall ist eine Einstellbarkeit dieses Abstandes von Vorteil. Die Haltemittel können als Greifer, Stempel, aber auch als Führungsbänder ausgestaltet sein.

Weitere Ausführungsbeispiele der Erfindung gehen aus der gegenständlichen Beschreibung und den Ansprüchen hervor.

Die einzelnen Figuren zeigen:
- Fig. 1: Eine Skizze eines ersten Ausführungsbeispiels eines erfindungsgemäßen Leimwerkes
- Fig. 2: Eine Aufsicht auf die Wirkfläche der Gegenlage des in Figur 1 gezeigten Leimwerkes
- Fig. 3: Eine Aufsicht auf eine Wirkfläche der Gegenlage eines weiteren in der Figur 4 gezeigten Leimwerkes
- Fig. 4: Eine Skizze eines zweiten Ausführungsbeispiels eines erfindungsgemäßen Leimwerkes
- Fig. 5: Den Boden eines Kreuzbodenventilsackes
- Fig. 6: Eine Aufsicht auf die Gegenlage eines weiteren Leimwerkes

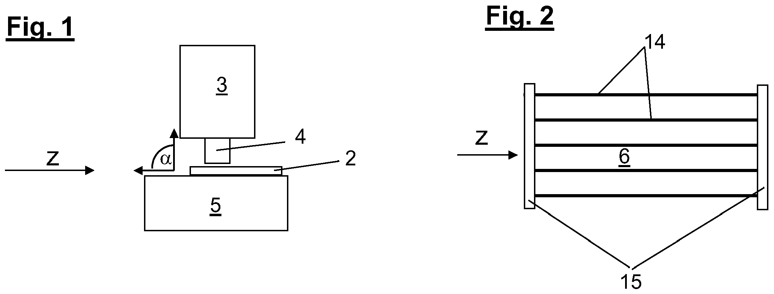

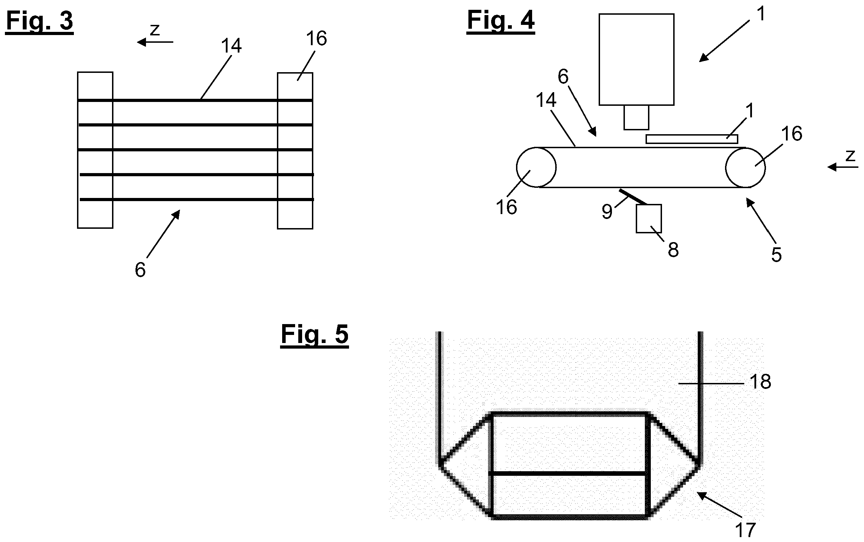

In Figur 1 ist ein Ausführungsbeispiel einer erfindungsgemäßen Beleimungsstation gezeigt, die einen Auftragskopf 3 mit einer Düsenleiste 4 aufweist, mit der die Sackbestandteile 2 beleimt werden. Der Winkel α ist der Winkel, in dem die Sackbestandteile in den von der Düsenleiste 4 und der Gegenlage 5 gebildeten Beleimungsspalt 12 einlaufen. Die Gegenlage 5 ist in Figur 3 stilisiert dargestellt und kann in der in den Figuren 2, 3, 4 und 6 dargestellten Form verwirklicht sein.

In Figur 2 sind die Bänder 14 diejenigen Elemente, die die Wirkfläche 6 der Gegenlage 5 definieren. Diejenigen Oberflächenbestandteile der Bänder 14, die in Kontakt mit den Sackbestandteilen 2 kommen, wenn dieser über die Bänder 14 geführt werden, bilden in diesem Fall die Wirkfläche 6. Die Bänder können Gitarrensaiten sein, die wie in Figur 2 weitgehend parallel zueinander ausgerichtet sind und unter einer bestimmten (geringen) mechanischen Spannung stehen. Die Gitarrensaiten oder Bänder 14 sind an den Schenkeln 15 angelenkt. Es ist auch bei dieser Ausführungsform vorteilhaft, die Bänder entlang der Laufrichtung der Sackbestandteile auszurichten.
Die von den Bändern 14 gebildete Wirkfläche 6 ist bereits deshalb segmentiert, weil die Bänder voneinander beabstandet sind.

Figur 4 zeigt eine weitere Beleimungsstation mit einer anderen Gegenlage 5, die wieder Bänder 14 aufweist, deren die Sackbestandteile 2 berührende Oberflächenbestandteile die Wirkfläche 6 bilden. Im Unterschied zu dem in Figur 4 gezeigten Ausführungsbeispiel werden die Bänder von den Führungswalzen 16 geführt und in die Bewegungsrichtung z der Sackbestandteile 2 bewegt. Die solcherart geführten Bänder werden wieder von der Rakelvorrichtung 8 mit dem Rakelmesser 9 abgerakelt.

Die Figur 3 zeigt die von den Bändern 14, die auf den Leitwalzen 16 laufen, gebildete Wirkfläche 5 aus der Sicht des Auftragskopfes 5.

Figur 5 zeigt den Boden 17 eines Kreuzbodenventilsackes 18. Durch die Abbildung soll verdeutlicht werden, dass die Falt- und Materialkanten eines solchen Sackbodens Höhenunterschiede aufweisen. Angesichts dieser Höhenunterschiede ist die Anwendung der gezeigten Gegenlagen 5 hier besonders vorteilhaft.

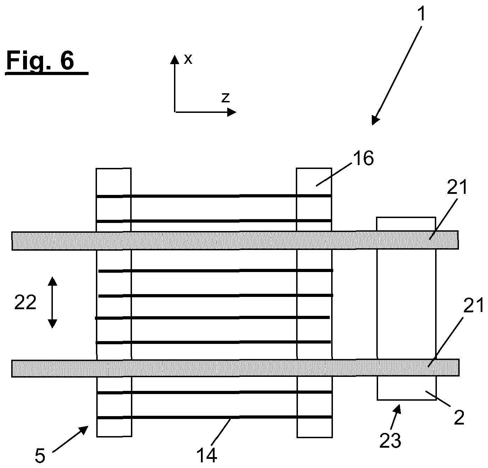

In Figur 6 ist eine weitere Möglichkeit angedeutet, die Sackbestandteile 2 in einem Leimwerk 1 zu führen. Zunächst ist eine Gegenlage 5, die der Gegenlage 5 aus den Figuren 5 und 6 weitgehend entspricht, aus Sicht des Auftragskopfes 3 dargestellt. Zusätzlich sind jedoch die Bänder 21 dargestellt, die aus Sicht des Düsenkopfes vor den Bändern 14 der Gegenlage befindlich sind. Beim Transport durch das Leimwerk 1 werden die Sackbestandteile 2 zwischen den Bändern 14 und 21 festgelegt. Beide Arten von Bändern sind in der Transportrichtung beweglich, so dass die Sackbestandteile zwischen den weitgehend synchron laufenden Bändern mitgeführt werden. Die Bänder 21 sind in ihrer Lage in der Richtung x quer zur Transportrichtung z der Sackbestandteile 1 verschieblich. Die Verschiebbarkeit wird mit fachüblichen Maßnahmen, wie einer verschieblichen Aufhängung der Walzen, die die Bänder führen, gewährleistet.
Es ist vorteilhaft, den Abstand der Bänder 21 zueinander einzustellen, dass die transportierten Sackbestandteile durch die Bänder in ihren Endbereichen in x-Richtung erfasst werden.

| **Bezugszeichenliste** | |
|---|---|
| 1 | Erstes Leimwerk |
| 2 | Sackbestandteile |
| 3 | Auftragskopf |
| 4 | Düsenleiste |
| 5 | Gegenlage |
| 6 | Wirkfläche der Gegenlage 5 |
| 7 | |
| 8 | Rakelvorrichtung |
| 9 | Rakelmesser |
| 10 | |
| 11 | |
| 12 | |
| 13 | |
| 14 | Bänder der Gegenlage 5 |
| 15 | Schenkel, an denen die Bänder 14 angelenkt sind |
| 16 | Führungswalzen |
| 17 | Sackboden |
| 18 | Kreuzbodenventilsack |
| 19 | |
| 20 | |
| 21 | Bänder |
| 22 | Pfeil |
| 23 | Endbereich in x-Richtung |
| L | |
| B | |
| z | Transportrichtung des Sackbestandteils 2 |
| x | Richtung quer zur Transportrichtung z |
| α | Einlaufwinkel |

## Patentansprüche

1. Bodenlegevorrichtung zur Herstellung von Säcken,
- vorzugsweise von Kreuzbodenventilsäcken (18),
- welche zumindest ein Leimwerk (1) enthält, das Bestandteile (2) der Säcke beleimt,
- wobei das Leimwerk (1) eine Düsenleiste (4) enthält, welche (4) zumindest eine Düse zur Extrusion von Leim auf die Sackbestandteile (2) aufweist,
- eine Gegenlage (5), welche die Sackbestandteile (2) mit einer Kraft an die Düsenleiste (4) anstellt
- wobei die Gegenlage (5) eine Wirkfläche (6) aufweist, und
- wobei mit dieser Wirkfläche (6) zumindest ein Teil der Rückseite der zu beleimenden Fläche eines Sackbestandteiles mit Kraft beaufschlagbar ist,
**dadurch gekennzeichnet, dass**
die Wirkfläche (6) segmentiert ist indem die Wirkfläche (6) Bänder (14) enthält und/oder durch Bänder (14) definiert wird, wobei mit jedem durch eine Krafteinwirkung der Düsenleiste in Richtung auf die Wirkfläche ausgelenkten Band auf die Rückseite der Sackbestandteile drückbar ist.

2. Bodenlegevorrichtung nach dem vorstehenden Anspruch,
**dadurch gekennzeichnet,**
**dass** die Gegenlage (5) flexible und/oder federnde Materialien enthält.

3. Bodenlegevorrichtung nach einem der vorstehenden Ansprüche,
**dadurch gekennzeichnet,**
**dass** die Bänder (14) in der Ebene der Wirkfläche (6) eine Breite (B) und eine Länge (L) aufweisen, die zumindest in einem Längenverhältnis von 1 : 4 stehen.

4. Bodenlegevorrichtung nach dem vorstehenden Anspruch,
**dadurch gekennzeichnet,**
**dass** die Bänder (14) aus einem der folgenden Materialien bestehen:
- ein flexibler Kunststoff, vorzugsweise ein Elastomer
- Drähte, vorzugsweise aus Metall wie Gitarrensaiten
- Polymerfasern

5. Bodenlegevorrichtung nach dem vorstehenden Anspruch,
**dadurch gekennzeichnet,**
**dass** die Bänder (14) der Wirkfläche (6) in derselben Richtung ausgerichtet sind, die die Relativbewegung zwischen der Düsenleiste (4) und den Sackbestandteilen (2) hat.

6. Bodenlegevorrichtung nach dem vorstehenden Anspruch,
**dadurch gekennzeichnet,**
**dass** die Bänder (14) der Wirkfläche (6) in dieselbe Richtung beweglich sind, in die die Relativbewegung zwischen den Sackbestandteilen (2) und der Düsenleiste (4) zeigt.

7. Bodenlegevorrichtung nach einem der beiden vorstehenden Ansprüche,
**dadurch gekennzeichnet,**
**dass** zumindest eine Bandführungswalze (16) vorgesehen ist, die die Beweglichkeit der Bänder (14) herbeiführt.

8. Bodenlegevorrichtung nach einem der zwei vorstehenden Ansprüche,
**dadurch gekennzeichnet,**
**dass** die Bänder beweglich sind und in einer Wirkverbindung mit einem Antrieb stehen, mit dem die Bänder bewegbar sind.

9. Bodenlegevorrichtung nach einem der vorstehenden Ansprüche,
**dadurch gekennzeichnet, dass**
zumindest Teile der Wirkfläche (6) relativ zur Düsenleiste (4) schwenkbar und/oder beweglich angebracht sind.

10. Bodenlegevorrichtung nach dem vorstehenden Anspruch,
**dadurch gekennzeichnet,**
**dass** Vorrichtungsbestandteile (15,16), die die Bänder (14) führen oder an denen die Bänder (14) befestigt sind, schwenkbar gelagert sind.

11. Bodenlegevorrichtung nach einem der vorstehenden Ansprüche,
**gekennzeichnet durch**
Haltemittel (21), mit welchen eine Haltekraft auf diejenige Seite der Sackbestandteile (2) ausübbar ist, die in der Beleimungsstation (1) mit Leim beaufschlagbar ist, und mit der (21) die Haltekraft den Sackbestandteilen (2) innerhalb der Beleimungsstation (1) vermittelbar ist.

12. Bodenlegevorrichtung nach dem vorstehenden Anspruch,
**dadurch gekennzeichnet,**
**dass** mit den Haltemitteln (21) Halteflächen der Sackbestandteile (2) mit der Haltekraft beaufschlagbar sind, die in der Richtung (x) quer zur Relativbewegung (z) zwischen Sackbestandteilen (2) und Düsenleiste (4) beabstandet sind.

13. Bodenlegevorrichtung nach dem vorstehenden Anspruch,
**dadurch gekennzeichnet,**
**dass** der Abstand zwischen den Halteflächen (6) einstellbar ist.

14. Leimwerk (1) zur Beleimung von Sackbestandteilen (2), welches eine Düsenleiste (4) enthält, welche zumindest eine Düse zur Extrusion von Leim auf die Sackbestandteile (2) aufweist,
welches eine Gegenlage (5), welche (5) die Sackbestandteile (2) mit einer Kraft an die Düsenleiste (4) anstellt
wobei die Gegenlage (5) eine Wirkfläche (6) aufweist,
wobei mit dieser Wirkfläche (6) zumindest ein Teil der Rückseite der zu beleimenden Fläche eines Sackbestandteiles mit Kraft beaufschlagbar ist,
wobei die Wirkfläche (6) ein Band (14) enthält und/oder durch ein Band (14) definiert wird, wobei mit dem durch eine Krafteinwirkung der Düsenleiste in Richtung auf die Wirkfläche ausgelenkten Band auf die Rückseite der Sackbestandteile drückbar ist
**dadurch gekennzeichnet,**
**dass** die Wirkfläche (6) segmentiert ist indem
die Wirkfläche (6) Bänder (14) enthält und/oder durch Bänder (14) definiert wird, wobei mit jedem durch eine Krafteinwirkung der Düsenleiste in Richtung auf die Wirkfläche ausgelenkten Band auf die Rückseite der Sackbestandteile drückbar ist.

15. Verfahren zur Herstellung von Säcken,
- vorzugsweise von Kreuzbodenventilsäcken (18),
- bei welchem die Bestandteile (2) der Säcke beleimt werden,
- und bei welchem die Säcke zur Beleimung an einer Düsenleiste (4) vorbeigeführt werden,
- welche (4) zumindest eine Düse zur Extrusion von Leim auf die Sackbestandteile aufweist, mit welcher Leim auf die Sackbestandteile (2) übertragen wird und
- wobei die Sackbestandteile (2) mit einer Gegenlage (5) mit einer Kraft an die Düsenleiste (4) angestellt werden,
**dadurch gekennzeichnet, dass**
die Kraft von verschiedenen Teilflächen einer Wirkfläche der Gegenlage auf die Rückseite der zu beleimenden Fläche übertragen wird, wobei die Wirkfläche Bänder enthält und/oder durch Bänder definiert wird, so dass die Wirkfläche segmentiert ist, wobei mit jedem durch eine Krafteinwirkung der Düsenleiste in Richtung auf die Wirkfläche ausgelenkten Band auf die Rückseite der Sackbestandteile gedrückt wird.

## Claims

1. A bottom laying device for the production of sacks,
- preferably cross-bottom valve sacks (18),
- which contains at least one gluing unit (1), which glues components (2) of the sacks,
- wherein the gluing unit (1) contains a nozzle strip (4), which (4) has at least one nozzle for the extrusion of glue onto the sack components (2),
- a counter layer (5), which places the sack components (2) with a force against the nozzle strip (4),
- wherein the counter layer (5) has a working surface (6), and
- wherein with this working surface (6) at least one part of the back side of the surface of a sack component to be glued can be subjected to force,
**characterized in that**
the working surface (6) is segmented, **in that** the working surface (6) contains bands (14) and/or is defined by bands (14), wherein with each band deflected by a force of the nozzle strip in the direction towards the working surface pressure can be applied to the back side of the sack components.

2. The bottom laying device according to the preceding claim,
**characterized in**
**that** the counter layer (5) contains flexible and/or resilient materials.

3. The bottom laying device according to any one of the preceding claims,
**characterized in**
**that** the bands (14) have a width (B) and a length (L) in the plane of the working surface (6), which are at least in a length ratio of 1 : 4.

4. The bottom laying device according to the preceding claims,
**characterized in**
**that** the bands (14) consist of one of the following materials:
- a flexible plastic, preferably an elastomer
- wires, preferably made of metal such as guitar strings
- polymer fibers

5. The bottom laying device according to the preceding claims,
**characterized in**
**that** the bands (14) of the working surface (6) are aligned in the same direction, which the relative movement between the nozzle strip (4) and the sack components (2) has.

6. The bottom laying device according to the preceding claims,
**characterized in**
**that** the bands (14) of the working surface (6) are movable in the same direction, in which the relative movement between the sack components (2) and the nozzle strip (4) points.

7. The bottom laying device according to the two preceding claims,
**characterized in**
**that** at least one band guide roller (16) is provided, which brings about the movability of the bands (14).

8. The bottom laying device according to any one of the two preceding claims,
**characterized in**
**that** the bands are movable and are in an operative connection with a drive, with which the bands can be moved.

9. The bottom laying device according to any one of the preceding claims,
**characterized in that**
at least parts of the working surface (6) are mounted such that they can be pivoted and/or moved relative to the nozzle strip (4).

10. The bottom laying device according to the preceding claim,
**characterized in**
**that** components of the device (15, 16), which guide the bands (14) or to which the bands (14) are fastened, are pivotably mounted.

11. The bottom laying device according to any one of the preceding claims
**characterized by**
holding means (21), with which a holding force can be exerted on that side of the sack components (2), to which glue can be applied in the gluing station (1), and with which (21) the holding force can be imparted to the sack components (2) within the gluing station (1).

12. The bottom laying device according to the preceding claim,
**characterized in**
**that** with the holding means (21) the holding force can be applied to the holding surfaces of the sack components (2), which are spaced apart in the direction (x) transverse to the relative movement (z) between sack components (2) and nozzle strip (4).

13. The bottom laying device according to the preceding claim,
**characterized in**
**that** the distance between the holding surfaces (6) can be adjusted.

14. A gluing unit (1) for gluing sack components (2), which contains a nozzle strip (4), which has at least one nozzle for the extrusion of glue onto the sack components (2),
which has a counter layer (5), which (5) places the sack components (2) with a force against the nozzle strip (4),
wherein the counter layer (5) has a working surface (6),
wherein with this working surface (6) at least one part of the back side of the surface of a sack component to be glued can be subjected to force,
wherein the working surface (6) contains a band (14) and/or is defined by a band (14), wherein with the band deflected by a force of the nozzle strip in the direction towards the working surface pressure can be applied to the back side of the sack components,
**characterized in**
**that** the working surface (6) is segmented, in that the working surface (6) contains bands (14) and/or is defined by bands (14), wherein with each band deflected by a force of the nozzle strip in the direction towards the working surface pressure can be applied to the back side of the sack components.

15. A method for the production of sacks,
- preferably cross-bottom valve sacks (18),
- in which the components (2) of the sacks are glued,
- and in which the sacks are guided past a nozzle strip (4) for the gluing,
- which (4) has at least one nozzle for the extrusion of glue onto the sack components, with which glue is transferred to the sack components (2) and
- wherein the sack components (2) with a counter layer (5) are placed with a force against the nozzle strip (4),
**characterized in that**
the force of different partial surfaces of a working surface of the counter layer is transferred to the back side of the surface to be glued, wherein the working surface contains bands and/or is defined by bands, so that the working surface is segmented, wherein with each band deflected by a force of the nozzle strip in the direction towards the working surface pressure is applied to the back side of the sack components.

## Revendications

1. Dispositif de pose de fonds pour la fabrication de sacs,
- de préférence de sacs à valve et à fond croisé (18)
- qui contient au moins un dispositif d'encollage (1) qui encolle les composants (2) des sacs,
- le dispositif d'encollage (1) contenant une barre à buses (4), cette barre à buses (4) comprenant au moins une buse pour l'extrusion de la colle sur les composants du sac (2),
- un contre-appui (5) qui appuie les composants du sac (2) avec une force contre la barre de buses (4),
- le contre-appui (5) comprenant une surface active (6) et
- avec cette surface active (6), au moins une partie de l'arrière de la surface à encoller d'un composant de sac pouvant être sollicitée avec une force, **caractérisé en ce que**
la surface active (6) est segmentée grâce au fait que la surface active (6) contient des bandes (14) et/ou est définies par des bandes (14), moyennant quoi, avec chaque bande déviée en direction de la surface active par l'application d'une force de la barre de buses, il est possible de comprimer l'arrière des composants du sac.

2. Dispositif de pose de fonds selon la revendication précédente,
**caractérisé en ce que**
le contre-appui (5) contient des matériaux flexibles et/ou élastiques.

3. Dispositif de pose de fonds selon l'une des revendications précédentes,
**caractérisé en ce que**
les bandes (14) présentent, dans le plan de la surface active (6), une largeur (B) et une longueur (L), qui présentent entre elles au moins un rapport de longueur de 1:4.

4. Dispositif de pose de fonds selon la revendication précédente,
**caractérisé en ce que**
les bandes (14) sont constituées d'un des matériaux suivants :
- une matière plastique flexible, de préférence un élastomère,
- des fils, de préférence en métal comme des cordes de guitare,
- des fibres polymères.

5. Dispositif de pose de fonds selon la revendication précédente,
**caractérisé en ce que**
les bandes (14) de la surface active (6) sont orientées dans la même direction que le mouvement relatif entre la barre de buses (4) et les composants du sac (2).

6. Dispositif de pose de fonds selon la revendication précédente,
**caractérisé en ce que**
les bandes (14) de la surface active (6) sont mobiles dans la même direction que le mouvement relatif entre les composants du sac (2) et la barre de buses (4).

7. Dispositif de pose de fonds selon l'une des deux revendications précédentes,
**caractérisé en ce que**
au moins un cylindre de guidage de bande (16) est prévu, qui permet la mobilité des bandes (14).

8. Dispositif de pose de fonds selon l'une des deux revendications précédentes,
**caractérisé en ce que**
les bandes sont mobiles et sont en liaison fonctionnelle avec un dispositif d'entraînement avec lequel les bandes peuvent être déplacées.

9. Dispositif de pose de fonds selon l'une des revendications précédentes,
**caractérisé en ce que**
au moins des parties de la surface active (6) sont montées de manière pivotante et/ou mobiles par rapport à la barre de buses (4).

10. Dispositif de pose de fonds selon la revendication précédente,
**caractérisé en ce que**
des composants du dispositif (15, 16), qui guident les bandes (14) ou sur lesquels sont fixées les bandes (14), sont montés de manière pivotante.

11. Dispositif de pose de fonds selon l'une des revendications précédentes,
**caractérisé en ce que**
des moyens de maintien (21), avec lesquels une force de maintien peut être appliquée au côté des composants du sac (2) qui peut être encollé au niveau du poste d'encollage (1) et avec lesquels (21) la force de maintien peut être transmise aux composants du sac (2) à l'intérieur du poste d'encollage (1).

12. Dispositif de pose de fonds selon la revendication précédente,
**caractérisé en ce que**
avec les moyens de maintien (21), des surfaces de maintien des composants du sac (2), qui sont distantes dans la direction (x) transversalement par rapport au mouvement relatif (z) entre les composants du sac (2) et la barre de buses (4), peuvent être sollicités avec la force de maintien.

13. Dispositif de pose de fonds selon la revendication précédente,
**caractérisé en ce que**
la distance entre les surfaces de maintien (6) est réglable.

14. Dispositif d'encollage (1) pour l'encollage de composants de sac (2), qui contient une barre de buses (4) qui comprend au moins une buse pour l'extrusion de colle sur les composants du sac (2),
qui comprend un contre-appui (5), ce contre-appui (5) comprimant les composants du sac (2) avec une force contre la barre de buses (4),
le contre-appui (5) comprenant une surface active (6),
cette surface active (6) permettant d'appliquer une force sur au moins une partie de l'arrière de la surface à encoller d'un composant du sac,
la surface active (6) contenant une bande (14) et/ou étant définie par une bande (14), moyennant quoi, avec la bande déviée en direction de la surface active par l'application d'une force de la barre de buses, il est possible de comprimer l'arrière des composants du sac,
**caractérisé en ce que**
la surface active (6) est segmentée grâce au fait que la surface active (6) contient des bandes (14) et/ou est définies par des bandes (14), moyennant quoi, avec chaque bande déviée en direction de la surface active par l'application d'une force de la barre de buses, il est possible de comprimer l'arrière des composants du sac.

15. Procédé de fabrication de sacs,
- de préférence de sacs à valve et à fond croisé (18),
- dans lequel les composants (2) des sacs sont encollés,
- et dans lequel les sacs sont guidés vers une barre de buses (4) pour l'encollage,
- cette barre de buses (4) comprenant au moins une buse pour l'extrusion de la colle sur les composants du sac, avec laquelle la colle est transférée sur les composants du sac et
- les composants du sac (2) sont comprimés, avec un contre-appui (5), avec une force contre la barre de buses (4),
**caractérisé en ce que**
la force est transmise par différentes surfaces partielles d'une surface active du contre-appui vers l'arrière de la surface à encoller, la surface active contenant des bandes et/ou étant définie par des bandes, de façon à ce que la surface active soit segmentée, moyennant quoi, avec chaque bande déviée en direction de la surface active par l'application d'une force de la barre de buses, il est possible de comprimer l'arrière des composants du sac.
